# EUROPEAN PATENT APPLICATION

(11) **EP 4 175 232 A1**
(43) Date of publication of application: **03.05.2023**
(21) Application number: 21847169.6
(22) Date of filing: 18.03.2021
(51) Int. Cl.: H04L 12/00

(54) **CONGESTION CONTROL METHOD AND DEVICE**

(30) Priority: 22.07.2020 CN 202010713140
(71) Applicant: Huawei Technologies Co., Ltd., Shenzhen, Guangdong 518129 (CN)
(72) Inventor: LI, Guang, Shenzhen, Guangdong 518129 (CN); WANG, Xiaozhong, Shenzhen, Guangdong 518129 (CN); YUAN, Sai, Shenzhen, Guangdong 518129 (CN); BAI, Yu, Shenzhen, Guangdong 518129 (CN); ZHANG, Wenwu, Shenzhen, Guangdong 518129 (CN)
(74) Representative: Epping - Hermann - Fischer
(86) International application number: PCT/CN2021/081462
(87) International publication number: WO 2022/016889

(57) **Abstract**

This application discloses a congestion control method and apparatus. The method includes: when usage information of a buffer in a device satisfies a preset first condition, determining at least one first queue from the buffer, and performing congestion control on the at least one first queue, where the first condition includes a first threshold corresponding to the usage information of the buffer, and the at least one first queue is a queue whose queue delay is greater than or equal to a queue delay threshold or whose queue length is greater than or equal to a queue length threshold in a plurality of queues in the buffer. In this way, the device triggers a condition of congestion control based on a buffer status. This implements efficient congestion control while ensuring that no buffer overflow problem occurs, to improve network forwarding performance of the device.

## Description

This application claims priority to Chinese Patent Application No. 202010713140.9, filed with the China National Intellectual Property Administration on July 22, 2020 and entitled "CONGESTION CONTROL METHOD AND APPARATUS", which is incorporated herein by reference in its entirety.

### TECHNICAL FIELD

This application relates to the field of communication technologies, and in particular, to a congestion control method and apparatus.

### BACKGROUND

In a forwarding process, if traffic received by a device is less than a forwarding bandwidth, the device can directly forward the received traffic without buffering the traffic; or if traffic received by a device is greater than a forwarding bandwidth, the device cannot directly forward all the received traffic, and needs to buffer some traffic. However, limited by buffer space in the device, traffic that can be buffered in the device is limited. Once excessive traffic is received, a buffer overflow problem easily occurs. To prevent buffer overflow of the device, an appropriate congestion control method needs to be provided urgently, to make full use of buffer space, avoid a problem of erroneous packet drop or erroneous backpressure, and further improve network forwarding performance of the device.

### SUMMARY

Based on this, embodiments of this application provide a congestion control method and apparatus. A device sets, based on a buffer status of overall buffer space, a condition for triggering congestion control, records and updates, in real time based on an actual status of each queue, the condition for triggering congestion control, and then corresponds to a queue on which congestion control is to be implemented, to implement appropriate congestion control of the device. This can fully utilize buffer space and effectively avoid a problem of erroneous packet drop or erroneous backpressure, to improve network forwarding performance of the device.

According to a first aspect, this application provides a congestion control method. For example, the method may include: when usage information of a buffer in a device satisfies a preset first condition, determining at least one first queue from the buffer, and performing congestion control on the at least one first queue. The first condition includes a first threshold corresponding to the usage information of the buffer, and the at least one first queue is a queue whose queue delay is greater than or equal to a queue delay threshold in a plurality of queues in the buffer, or the at least one first queue is a queue whose queue length is greater than or equal to a queue length threshold in a plurality of queues in the buffer. In this way, the device does not need to perform congestion control based on a queue granularity, and presets a condition for triggering congestion control only for an overall buffer status of buffer space. The device can process a queue corresponding to the condition in a targeted manner when triggering congestion control. This simplifies configuration, improves buffer space utilization, and implements efficient congestion control while ensuring that no buffer overflow problem occurs, to improve network forwarding performance of the device.

The usage information of the buffer may be a buffer occupancy rate or a buffer remaining rate. The usage information of the buffer changes with running of the device. When a packet is stored in the buffer or a packet is extracted from the buffer, the usage information of the buffer changes.

In a possible implementation, for example, the determining, from the buffer, at least one first queue greater than or equal to a queue delay threshold may include: determining, as the at least one first queue, first M queues that are in a plurality of queues in the buffer and that are sorted in descending order of queue delays, where the queue delay threshold is equal to a queue delay of an M^{th} queue, and M is a positive integer. For example, the determining, from the buffer, at least one first queue greater than or equal to a queue length threshold may include: determining, as the at least one first queue, first N queues that are in a plurality of queues in the buffer and that are sorted in descending order of queue lengths, where the queue length threshold is equal to a queue length of an N^{th} queue, and N is a positive integer. In this way, when a congestion control condition is triggered, a queue with a large queue length or a large queue delay is controlled in a targeted manner, so that congestion control efficiency can be effectively improved, and a risk of buffer overflow of the device is quickly resolved, to improve network forwarding performance of the device. In an example, if queues in the buffer are classified into priorities, different conditions for triggering congestion control may be set in the device for different priorities. The first condition may correspond to a first priority, and the at least one first queue belongs to the first priority. In this example, for example, the determining, from the buffer, at least one first queue greater than a queue delay threshold may include: determining, as the at least one first queue, first K queues that are in a plurality of queues corresponding to the first priority and that are sorted in descending order of queue delays, where the queue delay threshold is equal to a queue delay of a K^{th} queue, and K is a positive integer. For example, the determining, from the buffer, at least one first queue greater than a queue length threshold may include: determining, as the at least one first queue, first L queues that are in a plurality of queues corresponding to the first priority and that are sorted in descending order of queue lengths, where the queue length threshold is equal to a queue length of an L^{th} queue, and L is a positive integer. In this way, when a congestion control condition corresponding to a priority is triggered, a queue with a large queue length or a large queue delay in a plurality of queues corresponding to the priority is controlled in a targeted manner, so that congestion control efficiency of the queue corresponding to the priority can be effectively improved, and a risk of buffer overflow of the device is quickly resolved, to improve network forwarding performance of the device.

In some possible implementations, when the usage information of the buffer is a buffer occupancy rate, the first condition may include that the buffer occupancy rate is greater than the first threshold; or when the usage information of the buffer is a buffer remaining rate, the first condition may include that the buffer remaining rate is less than the first threshold. In this way, appropriate and effective congestion control on the buffer in the device may be implemented based on an overall usage status of buffer space and the preset first threshold.

In some other possible implementations, the method may further include: when an updated value of the usage information of the buffer satisfies a preset second condition, determining, from the buffer, at least one second queue corresponding to the second condition, and performing congestion control on the at least one second queue. The second condition corresponds to a second priority, the at least one second queue belongs to the second priority, and the second condition is a second threshold corresponding to the updated value of the usage information of the buffer. In this way, the device does not need to perform congestion control based on a queue granularity, and sets different conditions for triggering different congestion control only for a buffer status of overall buffer space. The device can process queues corresponding to the different conditions in a targeted manner. This simplifies configuration, improves buffer space utilization, and implements efficient and accurate congestion control while ensuring that no buffer overflow problem occurs, to improve network forwarding performance of the device.

In an example, the second priority and the first priority to which the first queue belongs are different. In this case, a condition for triggering congestion control is correspondingly set for each priority, a queue on which congestion control is performed and that corresponds to each priority is recorded, and the priority is set in association with the corresponding condition for triggering congestion control. A manner in which congestion control is first performed on a queue with a low priority can ensure that traffic with a high priority is effectively forwarded by the device, to improve network forwarding performance of the device and improve user experience in using the device.

In another example, the second priority and the first priority to which the first queue belongs are the same. In this case, when a plurality of congestion control manners are enabled and it is determined that a risk of buffer overflow exists at the same time, a sequence of triggering the plurality of congestion control manners is appropriately set, and corresponding trigger conditions are set based on the sequence of triggering the congestion control manners. In this way, if a congestion degree in the buffer is low, congestion control is performed by using a determined congestion control manner that needs to be triggered first, and congestion control is performed by using a determined congestion control manner that needs to be triggered later only when the congestion degree is high. The congestion control manner is set in association with the corresponding condition for triggering congestion control. This can ensure that congestion control of a queue is more proper, improve network forwarding performance of the device, and improve user experience in using the device.

It may be understood that, the updated value of the usage information of the buffer is an updated value of the buffer occupancy rate, and the second condition includes that the updated value of the buffer occupancy rate is greater than the second threshold, where the second threshold is greater than the first threshold; or the updated value of the usage information of the buffer is an updated value of the buffer remaining rate, and the second condition includes that the updated value of the buffer remaining rate is less than the second threshold, where the second threshold is less than the first threshold. In this way, appropriate and effective congestion control on the buffer in the device may be implemented based on an overall usage status of buffer space and the preset first threshold and second threshold.

In an example, for example, the performing congestion control on at least one first queue in the method may include: adding an explicit congestion notification (English: Explicit Congestion Notification, ECN for short) mark to a dequeued packet in the at least one first queue, where the ECN mark indicates a source end device to reduce a packet sending rate in a queue corresponding to the first queue. In this case, for example, the performing congestion control on at least one second queue in the method includes: sending a backpressure signal to an upstream device of the device through an ingress port of the at least one second queue, where the backpressure signal indicates the upstream device to stop sending a packet.

It may be understood that, for example, the performing congestion control on the at least one first queue in the method may include: performing backpressure control or packet drop control on the at least one first queue. Backpressure control refers to preventing an upstream device (or an upstream module of the device) of the device from sending a packet or controlling a source end device to reduce a packet sending rate. Packet drop control refers to dropping a packet received by the device. Both backpressure control and packet drop control can effectively reduce storage pressure of the buffer and avoid buffer overflow.

The packet drop control may be specifically performing packet drop processing before a packet to enter the first queue is enqueued, or may be performing packet drop processing on a packet that has entered the first queue. The backpressure control may be sending a backpressure signal (for example, a priority-based flow control (English: Priority-Based Flow Control, PFC for short) frame or a pause (English: PAUSE) frame) to an upstream device to implement backpressure, or may be sending the backpressure signal to an upstream module (for example, an upstream buffer) of the device to implement backpressure.

In addition, the at least one first queue determined in the method may further include a queue in which there is neither a dequeued packet nor an enqueued packet within preset duration. The queue is referred to as an idle queue. Because the idle queue has no enqueuing and/or dequeuing operation within the preset duration, it may be determined that the idle queue cannot normally participate in a forwarding process of the device. Congestion control (for example, packet drop) is performed on the idle queue, so that buffer space occupied by the idle queue can be released, to effectively improve buffer utilization and solve a congestion problem.

According to a second aspect, an embodiment of this application further provides a congestion control apparatus, including a first determining unit and a first control unit. The first determining unit is configured to: when usage information of a buffer in a device satisfies a preset first condition, determine, from the buffer, at least one first queue greater than or equal to a queue delay threshold or greater than or equal to a queue length threshold, where the first condition includes a first threshold corresponding to the usage information of the buffer. The first control unit is configured to perform congestion control on the at least one first queue.

In some possible implementations, the first determining unit is specifically configured to: determine, as the at least one first queue, first M queues that are in a plurality of queues in the buffer and that are sorted in descending order of queue delays. The queue delay threshold is equal to a queue delay of an M^{th} queue, and M is a positive integer. Alternatively, the first determining unit is specifically configured to: determine, as the at least one first queue, first N queues that are in a plurality of queues in the buffer and that are sorted in descending order of queue lengths. The queue length threshold is equal to a queue length of an N^{th} queue, and N is a positive integer.

In an example, the first condition corresponds to a first priority, and the at least one first queue belongs to the first priority.

In this example, the first determining unit is specifically configured to: determine, as the at least one first queue, first K queues that are in a plurality of queues corresponding to the first priority and that are sorted in descending order of queue delays. The queue delay threshold is equal to a queue delay of a K^{th} queue, and K is a positive integer. Alternatively, the first determining unit is specifically configured to: determine, as the at least one first queue, first L queues that are in a plurality of queues corresponding to the first priority and that are sorted in descending order of queue lengths. The queue length threshold is equal to a queue length of an L^{th} queue, and L is a positive integer.

It may be understood that the usage information of the buffer is a buffer occupancy rate, and the first condition includes that the buffer occupancy rate is greater than the first threshold; or the usage information of the buffer is a buffer remaining rate, and the first condition includes that the buffer remaining rate is less than the first threshold.

In some other possible implementations, the apparatus may further include a second determining unit and a second control unit. The second determining unit is configured to: when an updated value of the usage information of the buffer satisfies a preset second condition, determine, from the buffer, at least one second queue corresponding to the second condition, where the second condition corresponds to a second priority, the at least one second queue belongs to the second priority, and the second condition is a second threshold corresponding to the updated value of the usage information of the buffer. The second control unit is configured to perform congestion control on the at least one second queue.

In an example, the second priority is different from the first priority to which the first queue belongs.

In another example, the second priority and the first priority to which the first queue belongs are the same.

In some possible implementations, the updated value of the usage information of the buffer is an updated value of the buffer occupancy rate, and the second condition includes that the updated value of the buffer occupancy rate is greater than the second threshold, where the second threshold is greater than the first threshold; or the updated value of the usage information of the buffer is an updated value of the buffer remaining rate, and the second condition includes that the updated value of the buffer remaining rate is less than the second threshold, where the second threshold is less than the first threshold.

In some other possible implementations, the first control unit is specifically configured to: add an explicit congestion notification ECN mark to a dequeued packet in the at least one first queue, where the ECN mark indicates a source end device to reduce a packet sending rate in a queue corresponding to the first queue. In this implementation, the second control unit is specifically configured to: send a first backpressure signal to an upstream device of the device through an ingress port of the at least one second queue, where the first backpressure signal indicates the upstream device to stop sending a packet.

It may be understood that the first control unit is specifically configured to: perform backpressure control or packet drop control on the at least one first queue.

In some possible implementations, the at least one first queue further includes a queue in which there is neither a dequeued packet nor an enqueued packet within preset duration.

It should be noted that the congestion control apparatus provided in the second aspect corresponds to the congestion control method provided in the first aspect. Therefore, for various possible implementations and achieved technical effects of the congestion control apparatus provided in the second aspect, refer to the descriptions of the congestion control method provided in the first aspect.

According to a third aspect, an embodiment of this application further provides a device. The device includes a memory and a processor. The memory is configured to store program code. The processor is configured to run instructions in the program code, to enable the network device to perform the congestion control method in any implementation of the first aspect.

According to a fourth aspect, an embodiment of this application further provides a computer program product. When the computer program product is run on a computer, the computer is enabled to perform the congestion control method according to any implementation of the first aspect.

According to a fifth aspect, an embodiment of this application further provides a computer-readable storage medium, and the computer-readable storage medium stores instructions. When the instructions are run on a computer, the computer is enabled to perform the congestion control method in any implementation of the first aspect.

### BRIEF DESCRIPTION OF DRAWINGS

The following briefly describes accompanying drawings used in describing embodiments.
FIG. 1a is a schematic diagram of a structure of a device 100 according to an embodiment of this application;
FIG. 1b is an example diagram of a queue in a device 100 according to an embodiment of this application;
FIG. 2 is a schematic flowchart of a congestion control method 100 according to an embodiment of this application;
FIG. 3 is a schematic diagram of a structure of a device 200 according to an embodiment of this application;
FIG. 4 is a schematic diagram of packet drop control according to an embodiment of this application;
FIG. 5 is a schematic flowchart of another congestion control method 200 according to an embodiment of this application;
FIG. 6a is a schematic diagram of an example of a congestion control process according to an embodiment of this application;
FIG. 6b is another schematic diagram of an example of a congestion control process according to an embodiment of this application;
FIG. 6c is still another schematic diagram of an example of a congestion control process according to an embodiment of this application;
FIG. 6d is yet another schematic diagram of an example of a congestion control process according to an embodiment of this application;
FIG. 7a is a schematic diagram of a priority classification manner according to an embodiment of this application;
FIG. 7b is another schematic diagram of a priority classification manner according to an embodiment of this application;
FIG. 8 is a schematic diagram of a structure of a congestion control apparatus 800 according to an embodiment of this application; and
FIG. 9 is a schematic diagram of a structure of a device 900 according to an embodiment of this application.

### DESCRIPTION OF EMBODIMENTS

The following describes technical solutions of embodiments in this application with reference to accompanying drawings. A network architecture and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of a new service scenario, the technical solutions provided in embodiments of this application are also applicable to similar technical problems.

Ordinal numbers such as "1", "2", "3", "first", "second", and "third" in this application are used to distinguish between a plurality of objects, but are not used to limit a sequence of the plurality of objects.

"A and/or B" mentioned in this application should be understood as including the following cases: Only A is included, only B is included, or both A and B are included.

A buffer in a device means that for a device having a forwarding function, the device generally has a buffer function inside. For example, when traffic received by the device is greater than a forwarding bandwidth, the buffer in the device is used to store a packet that cannot be directly forwarded and that is in the received traffic. A packet is stored in a form of a queue in the buffer. A queue in the buffer includes an input queue (English: Input Queue, IQ for short) or an output queue (English: Output Queue, OQ for short). In an example, the buffer usually performs storing in a form of an OQ, to be specific, at least one OQ is actually stored in the buffer, and packet information such as a packet identifier and a descriptor of each packet in each OQ is recorded in the OQ. In another example, the buffer further includes at least one virtual IQ, and each virtual IQ records a queue length (or delay) of the IQ, to be specific, when a packet enters the IQ, the queue length (or delay) of the IQ is updated. When a packet enters a device and is stored in a buffer, an IQ corresponding to an ingress port receiving the packet refreshes a queue length (or delay) based on the added packet. For example, a length of the packet is added to the queue length of the IQ corresponding to the ingress port, to obtain an updated queue length of the IQ. In addition, related information of the packet is added to an OQ corresponding to an egress port for sending the packet. For example, an identifier of the packet is added to the OQ corresponding to the egress port, and the length of the packet is added to a queue length of the OQ, to update the queue length of the OQ.

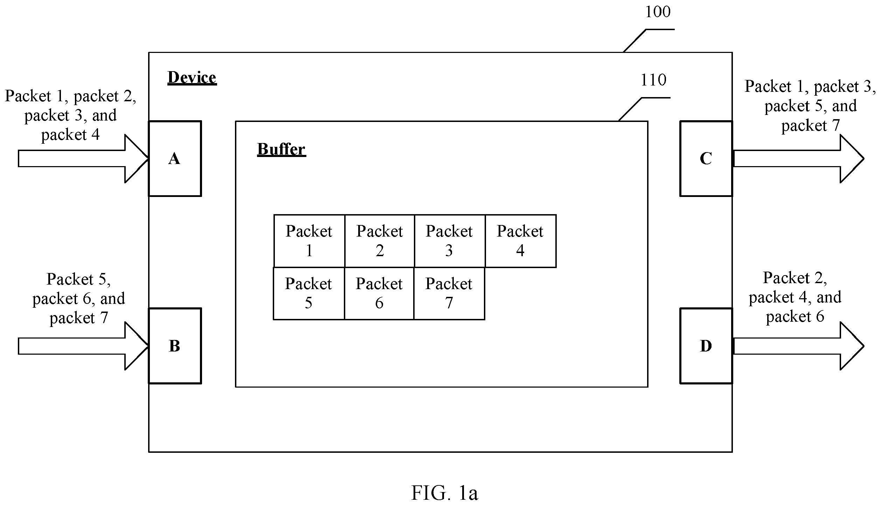

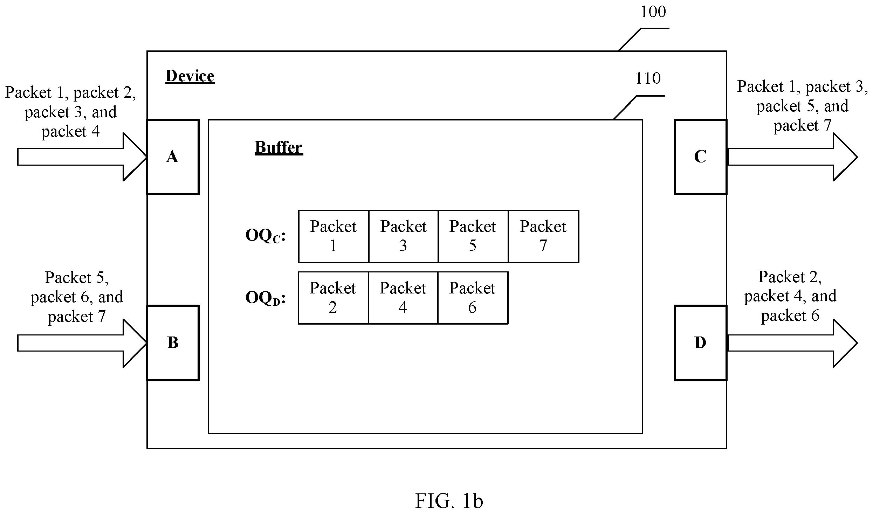

For example, as shown in FIG. 1a, a device 100 includes an ingress port A, an ingress port B, an egress port C, and an egress port D. The device 100 further includes a buffer 110. Packets 1 to 7 are forwarded by the device 100. Specifically, the device 100 receives the packets 1 to 4 through the ingress port A, receives the packets 5 to 7 through the ingress port B, forwards the packets 1, 3, 5, and 7 out of the device 100 through the egress port C, and forwards the packets 2, 4, and 6 out of the device 100 through the egress port D. The packets 1 to 7 are stored in the buffer 110 in the device 100. As shown in FIG. 1b, there are four queues in the device 100: IQA, IQB, OQC, and OQD. The IQA and the IQB may be virtual queues, and the IQA correspondingly stores a total length (or a total delay) of the packet 1, packet 2, packet 3, and packet 4, which is denoted as a queue length 1 (or a delay 1). The IQB correspondingly stores a total length (or a total delay) of the packet 5, the packet 6, and the packet 7, which is denoted as a queue length 2 (or a delay 2). The OQC includes the packet 1, the packet 3, the packet 5, and the packet 7. The OQD includes the packet 2, the packet 4, and the packet 6. The OQC and the OQD record packet information such as packet identifiers and descriptors corresponding to packets in queues of the OQC and the OQD.

A packet that cannot be directly forwarded is stored in a buffer in a device in a form of a queue. This solves a problem that traffic cannot be directly forwarded when the received traffic exceeds a forwarding bandwidth of the device. However, limited by buffer space in the device, a phenomenon of buffer overflow may occur on the device, to be specific, the buffer space is insufficient due to excessive buffer traffic. In this case, congestion control needs to be performed on the device.

Currently, congestion control is usually performed at a queue granularity.

In a first manner, a corresponding queue length threshold (or a queue delay threshold) is separately set for each queue in a device. When a queue length (or a queue delay) exceeds the queue length threshold (or the queue delay threshold) corresponding to the queue, congestion control such as packet drop or backpressure is performed on the queue. Although this manner can avoid a phenomenon of buffer overflow on the device, because a queue length (or a queue delay) of each queue is uncertain, and the queue length (or the queue delay) of each queue is usually unevenly distributed, in this manner, it is very difficult to set an appropriate queue length threshold (or an appropriate queue delay threshold) for each queue separately. If the set queue length threshold (or the set queue delay threshold) is excessively small, when traffic occupies small buffer space, congestion control starts to be performed on the queue. As a result, the device cannot fully use buffer space, a port cannot maintain a stable packet transmission rate, and a network throughput is reduced. If the set queue length threshold (or the set queue delay threshold) is excessively large, buffer overflow occurs. As a result, the device performs congestion control, in an undifferentiated way, such as packet drop or backpressure and network forwarding performance is reduced.

In a second manner, to improve utilization of buffer space of a device, a corresponding threshold coefficient may also be separately set for each queue in the device, and a queue length threshold corresponding to the queue is determined based on a current remaining buffer space size in the device and a threshold coefficient of the queue. For example, the queue length threshold = a threshold coefficient a of the queue x the current remaining buffer space size. When the queue length exceeds the queue length threshold corresponding to the queue, congestion control such as packet drop or backpressure is performed on the queue. In this manner, because the current remaining buffer space size is introduced to dynamically determine the queue length threshold of the queue, a problem that the buffer space cannot be fully used in the first manner can be solved. However, because a queue length of each queue is uncertain, it is still very difficult to separately set an appropriate threshold coefficient for each queue. If the threshold coefficient is not set appropriately, the device performs congestion control such as erroneous packet drop or erroneous backpressure, and network forwarding performance is reduced.

Based on this, embodiments of this application provide a congestion control method. In the method, congestion control is no longer performed based on a queue granularity, but a condition for triggering congestion control is preset based on a buffer status of a device. In addition, at least one to-be-processed queue during congestion control is determined based on a real-time status of each queue in a buffer. In this way, when it is determined that current usage information (for example, a buffer remaining rate or a buffer occupancy rate) of the buffer in the device satisfies a preset condition, an identifier of at least one to-be-processed queue corresponding to the condition can be obtained. Therefore, congestion control is performed on the at least one queue based on the obtained identifier of the at least one queue. For example, backpressure or packet drop processing is performed on the at least one queue. In this way, the device does not need to set a corresponding queue length threshold (or a queue delay threshold) for each queue, but sets a condition for triggering congestion control only for a buffer status of overall buffer space, and records, based on a real-time status of the queue, a corresponding to-be-processed queue for the condition for triggering congestion control, so that the device can process the queue corresponding to the condition in a targeted manner when triggering congestion control. This simplifies configuration, improves buffer space utilization, and implements efficient congestion control while ensuring that no buffer overflow problem occurs, to improve network forwarding performance of the device.

For example, usage information of the buffer in the device is a buffer occupancy rate, a threshold 1 is set to 70%, and two queues with longest queue lengths are recorded as to-be-processed queues. In this scenario, if the buffer occupancy rate obtained by the device at a first moment is 50%, it is determined that the buffer occupancy rate at the first moment is less than the threshold 1, there is no risk of buffer overflow, and congestion control does not need to be performed. If the buffer occupancy rate obtained by the device at a second moment is 75%, it is determined that the buffer occupancy rate at the second moment exceeds the threshold 1, and there is a risk of buffer overflow. In this case, the device is triggered to perform congestion control. At the second moment, assuming that the buffer in the device includes a queue 1 to a queue 3, where a queue length of the queue 1 is 50 megabytes (English: MB), a queue length of the queue 2 is 10 MB, and a queue length of the queue 3 is 80 MB, the device may perform congestion control on recorded to-be-processed queues (namely, the queue 1 and the queue 3), to improve forwarding performance and congestion control efficiency of the device.

It may be understood that the foregoing scenario is merely an example of a scenario provided in embodiments of this application, but embodiments of this application are not limited to this scenario.

It should be noted that the device in embodiments of this application may be any device including a packet forwarding function and/or a packet buffer function, and the device includes but is not limited to a network device such as a switch or a router.

It should be noted that the usage information of the buffer in embodiments of this application changes in real time with running of the device (for example, the device receives a packet and/or the device sends a packet). The usage information of the buffer may be a current buffer occupancy rate of buffer space in the device, or may be a current buffer remaining rate of buffer space in the device. When the usage information of the buffer is the buffer occupancy rate, the buffer occupancy rate increases when a new packet is stored in the buffer in the device, and an increased part of the buffer occupancy rate is a quotient of a length of the packet divided by an entire buffer space size; or when a packet is forwarded out of the buffer by the device, the buffer occupancy rate decreases, and a decreased part of the buffer occupancy rate is a quotient of a length of the packet divided by an entire buffer space size. When the usage information of the buffer is the buffer remaining rate, the buffer remaining rate decreases when a new packet is stored in the buffer in the device, and a decreased part of the buffer remaining rate is a quotient of a length of the packet divided by an entire buffer space size; or when a packet is forwarded out of the buffer by the device, the buffer remaining rate increases, and an increased part of the buffer remaining rate is a quotient of a length of the packet divided by an entire buffer space size. At a moment, a sum of a buffer occupancy rate and a buffer remaining rate of a buffer is 1.

With reference to the accompanying drawings, the following describes in detail specific implementations of the congestion control method in embodiments of this application by using embodiments.

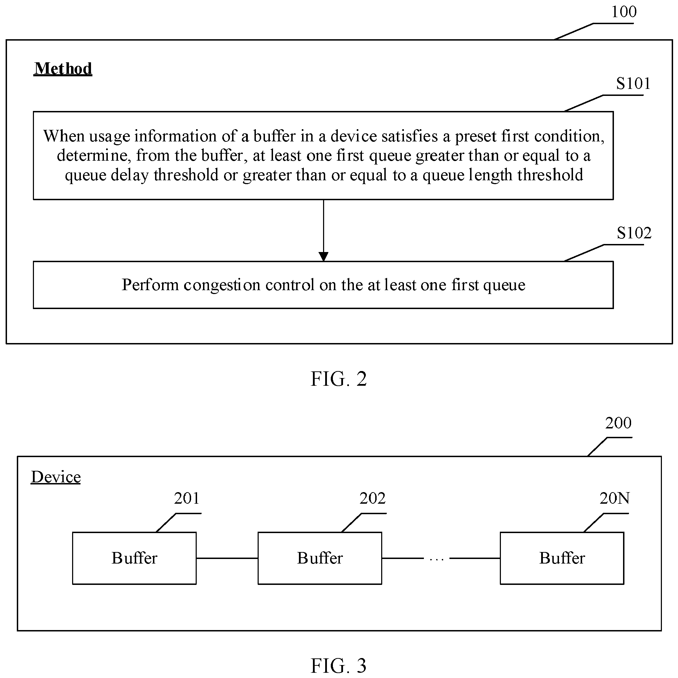

FIG. 2 is a schematic flowchart of a congestion control method 100 according to an embodiment of this application. In the method 100, for a scenario in which a plurality of queues share one buffer, congestion control is performed on a part of or all of the plurality of queues, to avoid an overflow problem of the shared buffer. In an example, the method 100 may be executed by the device 100 shown in FIG. 1a, and the buffer involved in the method 100 is the buffer 110 included in the device 100 in FIG. 1a. In another example, the method 100 may also be executed by, for example, a device 200 shown in FIG. 3. The device 200 includes a buffer 201, a buffer 202, ..., and a buffer 20N (where N is an integer greater than 1). Each buffer is shared by a plurality of queues, and each buffer performs congestion control on a part of or all queues stored in the buffer, to avoid an overflow problem of the buffer. In other words, the buffer involved in the method 100 may be any one buffer included in the device 200 in FIG. 3. An object of congestion control is all or a part of queues stored in the buffer in the method 100.

During specific implementation, refer to FIG. 2. The method 100 may include, for example, the following S101 and S102.

S10 1: When usage information of a buffer in a device satisfies a preset first condition, at least one first queue greater than or equal to a queue delay threshold or greater than or equal to a queue length threshold is determined from a buffer.

The usage information of the buffer changes with a quantity of packets in the buffer in a running process of the device, and is used to represent a current usage status of the buffer. In an example, the usage information of the buffer may be a buffer occupancy value or a buffer occupancy rate. The buffer occupancy value refers to an occupied space size of the buffer. For example, the buffer occupancy value is 100 MB. The buffer occupancy rate refers to a ratio of the occupied space size of the buffer to a total space size of the buffer. For example, assuming that the total space size of the buffer is 500 MB, and the current occupied space size is 100 MB, the current buffer occupancy rate is (100 MB/500 MB) = 20%. In another example, the usage information of the buffer may alternatively be a buffer remaining value or a buffer remaining rate. The buffer remaining value refers to an unoccupied space size of the buffer. For example, the buffer remaining value is 400 MB. The buffer remaining rate refers to a ratio of the unoccupied space size of the buffer to a total space size of the buffer. For example, assuming that the total space size of the buffer is 500 MB, and the current unoccupied space size is 400 MB, the current buffer occupancy rate is (400 MB/500 MB) = 80%. It should be noted that, at a same moment, a sum of the buffer occupancy value and the buffer remaining value is the total space size of the buffer, and a sum of the buffer occupancy rate and the buffer remaining rate is 1.

It should be noted that, when the usage information that is of the buffer and that is obtained by the device is the buffer occupancy value or the buffer remaining value, in one case, a corresponding buffer occupancy rate or buffer remaining rate may be calculated based on the known total space size and the obtained buffer occupancy value or buffer remaining value of the buffer, to determine, based on the buffer occupancy rate or the buffer remaining rate, whether the usage information of the buffer in the device satisfies the preset first condition. In another case, whether the usage information of the buffer in the device satisfies the preset first condition may also be directly determined based on the buffer occupancy value or the buffer remaining value. When the usage information that is of the buffer and that is obtained by the device is the buffer occupancy rate or the buffer remaining rate, whether the usage information of the buffer in the device satisfies the preset first condition may be directly determined based on the buffer occupancy rate or the buffer remaining rate.

The first condition is a condition for determining whether the device has a risk of buffer overflow or whether a congestion control measure needs to be taken. When the current usage information of the buffer in the device satisfies the preset first condition, it represents that the device has a risk of buffer overflow, and the device is triggered to implement the congestion control method provided in this embodiment of this application. The first condition may be preset on the device by a user or a network management system by using a command line, a configuration file, or the like. In an example, the first condition may be a buffer occupancy rate threshold or a buffer remaining rate threshold. In this case, that the usage information of the buffer in the device in S101 satisfies the preset first condition may specifically mean that the buffer occupancy rate is greater than the buffer occupancy rate threshold or the buffer remaining rate is less than the buffer remaining rate threshold. In another example, the first condition may alternatively be a buffer occupancy value threshold or a buffer remaining value threshold. In this case, that the usage information of the buffer in the device in S 10 1 satisfies the preset first condition may specifically mean that the buffer occupancy value is greater than the buffer occupancy value threshold or the buffer remaining value is less than the buffer remaining value threshold.

It should be noted that, to improve an effect and efficiency of congestion control, when performing congestion control, the device may choose to perform congestion control on a queue with a long delay or a long queue length. In this case, in this embodiment of this application, the device may further record and update, in real time, related information of a queue (namely, a queue with a long delay or a long queue length) on which congestion control is to be performed. For example, the device records an identifier of the at least one first queue, and recorded content may further include a queue delay or a queue length corresponding to each first queue. The queue delay refers to duration required for forwarding all packets in the queue by using a forwarding bandwidth, and the queue length refers to a sum of lengths of all the packets included in the queue. When the usage information of the buffer in the device satisfies the preset first condition, the queue that is currently recorded in the device and on which congestion control is to be performed is denoted as the first queue.

If priority classification is not performed on queues in the buffer, when determining that the usage information of the buffer satisfies the first condition, the device may obtain the identifier of the at least one first queue in queues stored in the buffer, and perform congestion control on the at least one first queue based on the identifier of the at least one first queue. For a specific implementation, refer to related descriptions of S102 below.

In an example, if the first queue is determined based on the queue delay, the at least one first queue may include a queue whose queue delay is greater than or equal to the queue delay threshold (for example, 10 milliseconds) and that is in a plurality of queues stored in the buffer. For example, a queue delay of each queue in the buffer is compared with the preset queue delay threshold, and a queue greater than the preset queue delay threshold is denoted as the first queue. For another example, after the queue delays of the queues in the buffer are sorted in descending order, first M (where M is a positive integer, for example, M = 5) queues are denoted as the first queue, where a queue delay of an M^{th} queue is equal to the queue delay threshold. It should be noted that, if the device supports a delay measurement function, the queue delays of the queues may be directly obtained; or if the device does not support a delay measurement function, the queue delays of the queues may be calculated based on a related indicator. For example, the queue delay is calculated based on a queue length and a forwarding bandwidth, which may be specifically: the queue delay = the queue length/the forwarding bandwidth. If a port corresponding to the queue is not classified into a priority, the forwarding bandwidth may be a total bandwidth of the port corresponding to the queue. If the port corresponding to the queue is classified into a different priority, the forwarding bandwidth may be a product of the total bandwidth of the port and a scheduling weight allocated to a priority corresponding to the queue.

In another example, if the first queue is determined based on the queue length, the at least one first queue may include a queue whose queue length is greater than or equal to the queue length threshold (for example, 300 MB) and that is in a plurality of queues stored in the buffer. For example, a queue length of each queue in the buffer is compared with the preset queue length threshold, and a queue greater than the preset queue length threshold is denoted as the first queue. For another example, after the queue lengths of the queues in the buffer are sorted in descending order, first N (where N is a positive integer, for example, N = 3) queues are denoted as the first queue, where a queue length of an N^{th} queue is equal to the queue length threshold. The queue length is one of parameters recorded in the buffer, and the device may directly obtain the queue lengths of the queues.

For example, it is assumed that at a moment at which S 101 is performed, the buffer in the device includes a queue 1 to a queue 5 that are not classified into priorities, queue delays of the queue 1 to the queue 5 are respectively 5 milliseconds, 10 milliseconds, 25 milliseconds, 8 milliseconds, and 22 milliseconds, and a preset quantity M is 2. In this case, the first queue on which congestion control is to be performed and that is recorded in the device is the queue 3 and the queue 5. In this case, the device determines that the current usage information of the buffer satisfies the preset first condition, and obtains an identifier of the queue 3 and an identifier of the queue 5, so that the device may perform S102 to separately perform congestion control on the queue 3 and the queue 5 based on the identifier of the queue 3 and the identifier of the queue 5.

If priority classification is performed on queues in the buffer, the device sets different conditions for different priorities, and records, for each priority, a queue on which congestion control is to be implemented and that corresponds to the priority. In this case, the first condition in S 101 may correspond to a first priority. When determining that the usage information of the buffer satisfies the first condition, the device may determine that congestion control needs to be performed on the first priority corresponding to the first condition. In this case, the device obtains an identifier of at least one first queue that is in the buffer and that corresponds to the first priority, and performs congestion control on the at least one first queue based on the identifier of the at least one first queue. For a specific implementation, refer to related descriptions of S102 below.

In an example, if the first queue is determined based on the queue delay, the at least one first queue may include a queue whose queue delay is greater than or equal to the queue delay threshold (for example, 10 milliseconds) and that is in a plurality of queues, corresponding to the first priority, stored in the buffer. For example, a queue delay of each queue corresponding to the first priority in the buffer is compared with a preset queue delay threshold, and a queue greater than the preset queue delay threshold is denoted as the first queue. For another example, after the queue delays of the queues corresponding to the first priority in the buffer are sorted in descending order, first K (where K is a positive integer, for example, K = 5) queues are denoted as the first queue, where a queue delay of a K^{th} queue is equal to the queue delay threshold.

In another example, if the first queue is determined based on the queue length, the at least one first queue may include a queue whose queue length is greater than or equal to the queue length threshold (for example, 300 MB) and that is in a plurality of queues, corresponding to the first priority, stored in the buffer. For example, a queue length of each queue corresponding to the first priority in the buffer is compared with the preset queue length threshold, and a queue greater than the preset queue length threshold is denoted as the first queue. For another example, after queue lengths of the queues corresponding to the first priority in the buffer are sorted in descending order, first L (where L is a positive integer, for example, L = 3) queues are denoted as the first queue, where a queue length of an L^{th} queue is equal to the queue length threshold.

For example, it is assumed that at a moment when S101 is performed, priorities of queues in the buffer in the device are classified into a priority 1 and a priority 2, queues corresponding to the priority 1 include a queue 1 to a queue 5, queue lengths of the queue 1 to the queue 5 are respectively 100 MB, 50 MB, 300 MB, 250 MB, and 220 MB, and a preset length is 200 MB. In this case, the first queue that corresponds to the priority 1, on which congestion control is to be performed, and that is recorded in the device includes the queue 3, the queue 4, and the queue 5. In this case, if the device determines that the current usage information of the buffer satisfies the first condition corresponding to the priority 1, the device obtains identifiers of the queue 3, the queue 4, and the queue 5 that correspond to the priority 1, so that the device may perform S102 to separately perform congestion control on the queue 3, the queue 4, and the queue 5 based on the identifiers of the queue 3, the queue 4, and the queue 5.

It should be noted that, as packets in a queue are enqueued and dequeued, a queue delay and a queue length continuously change, and a queue that is recorded in the device and on which congestion control is to be performed is also continuously updated. When a packet is enqueued or dequeued, the device updates a queue delay and/or a queue length of the queue, and updates, based on the updated queue delay and/or queue length, the queue on which congestion control is to be performed. For example, it is assumed that the preset quantity is 2, and the buffer in the device includes a queue 1 to a queue 5. At a first moment, queue lengths of the queue 1 to the queue 5 are respectively 100 MB, 50 MB, 300 MB, 250 MB, and 220 MB. In this case, the first queue on which congestion control is to be performed and that is recorded in the device includes the queue 3 and the queue 4. At a second moment, a 10 MB packet 1 is enqueued in the queue 1, and an 80 MB packet 2 is dequeued in the queue 4. In this case, the queue lengths of the queue 1 to the queue 5 are respectively 110 MB, 50 MB, 300 MB, 170 MB, and 220 MB. In this case, the first queue on which congestion control is to be performed and that is recorded in the device includes the queue 3 and the queue 5.

In some other possible implementations, for a queue that has no enqueuing and/or dequeuing operation within preset duration, it may be determined that the queue cannot normally participate in a forwarding process of the device, and the queue is denoted as an idle queue. To effectively improve buffer utilization, buffer space occupied by the idle queue may be released, to resolve a congestion problem. During specific implementation, the device may change a recorded value of a queue length and/or a recorded value of a queue delay of the idle queue to a maximum value. In this way, the queue on which congestion control is to be implemented and that is recorded by the device includes the idle queue, to be specific, the at least one first queue corresponding to the first condition in S 101 may further include the idle queue in which there is no dequeued packet or no enqueued packet within preset duration (for example, 10 seconds). Therefore, the device can release the buffer space occupied by the idle queue by performing the method 100. It should be noted that, in this implementation, the changed recorded value of the queue delay or the queue length of the idle queue does not affect the usage information of the buffer. In S101, the usage information that is of the buffer and that is for determining whether the first condition is satisfied reflects an actual usage status of the buffer, depends on an actual queue delay or queue length of each queue, and is irrelevant to a recorded value of each queue.

In an example, the device may set a flag bit and a timer to identify the idle queue. A specified period of the timer is the preset duration for identifying the idle queue, and a value of the flag bit indicates whether there is an enqueued packet or a dequeued packet within the period set by the timer. When there is an enqueuing operation or a dequeuing operation in the queue, the flag bit is set to 1 and the timer starts timing. Before the timer reaches the specified period, if there is the enqueuing operation or the dequeuing operation in the queue, the flag bit is set to 1 and the timer restarts timing. When the timer reaches the specified period, if the flag bit is 1, the flag bit is set to 0 and the timer restarts timing. When the timer reaches the specified period, if the flag bit is 0, it indicates that there is no dequeued or enqueued operation in the specified period, and the queue is determined as the idle queue.

It can be learned that, in S 101, it is determined that the current usage information of the buffer in the device satisfies the first condition, and execution of congestion control is triggered. In addition, the at least one first queue on which congestion control is to be performed is obtained in S 101, and an object on which congestion control is to be performed is determined, to provide a data basis for implementing congestion control in S102.

S102: Perform congestion control on the at least one first queue.

During specific implementation, for example, S102 may include: The device determines the at least one first queue based on the identifier of the at least one first queue, so that the device performs congestion control on each of the at least one first queue.

A congestion control manner may include backpressure and/or packet drop. In one case, S 102 may specifically include: performing backpressure control on the at least one first queue. In another case, S102 may alternatively specifically include: performing packet drop control on the at least one first queue. In still another case, S102 may further specifically include: performing packet drop control and backpressure control on the at least one first queue. Performing packet drop control and backpressure control on the determined at least one first queue at the same time can effectively improve congestion control efficiency. Backpressure refers to preventing an upstream device (or an upstream module of the device) of the device from sending a packet or controlling a source end device to reduce a packet sending rate. Packet drop refers to dropping a packet received by the device. Both backpressure and packet drop can effectively reduce storage pressure of the buffer and avoid buffer overflow.

In an example, an implementation of backpressure control may be controlling the source end device to reduce the packet sending rate. For example, an explicit congestion notification (English: Explicit Congestion Notification, ECN for short) mark is added to a dequeued packet of the first queue. In this way, when the packet arrives at a destination end device, the destination end device may send a reply packet (for example, an ACK packet) to the source end device that sends the packet. The reply packet carries the ECN mark, to notify the source end device that congestion occurs on a device on a packet forwarding path. In this case, the source end device may reduce, based on the reply packet that carries the ECN mark, the packet sending rate in the queue corresponding to the first queue, to relieve buffer overflow pressure in the device. It should be noted that this manner is applicable to a case in which the determined first queue is an OQ.

In another example, an implementation of backpressure control may be preventing the upstream device of the device from sending a packet. During specific implementation, the device generates a backpressure signal, and sends the backpressure signal to the upstream device of the device through an ingress port of the first queue, to notify the upstream device to stop sending the packet. In this case, the upstream device may stop, based on the backpressure signal, sending the packet to the device through the ingress port of the first queue, to relieve buffer overflow pressure in the device. For example, when different queue priorities are distinguished, the backpressure signal may be specifically a priority-based flow control (English: Priority-Based Flow Control, PFC for short) frame. To be specific, the device sends the PFC frame to the upstream device of the device through the ingress port of the first queue, where the PFC frame carries an identifier of a queue priority to which the queue on which congestion control is to be performed belongs, and is used to notify the upstream device to stop sending a packet of the queue priority to the device. For another example, when queue priorities are not distinguished, the backpressure signal may be specifically a pause (English: PAUSE) frame. To be specific, the device sends the pause frame to the upstream device of the device through the ingress port of the first queue, where the pause frame is used to notify the upstream device to stop sending a packet to the device. It should be noted that this manner is applicable to a case in which the determined first queue is an IQ.

It should be noted that, if the method 100 is applied to a device including a plurality of buffers (for example, the device 300 shown in FIG. 3), for a buffer that is in the plurality of buffers and that is directly connected to the upstream device, the backpressure signal may be generated and sent to the upstream device of the device through the ingress port of the first queue, to implement backpressure control on the first queue. For a buffer that is in a plurality of buffers and that is not directly connected to the upstream device, the buffer having a risk of overflow may also generate the backpressure signal and send the backpressure signal to the upstream module of the buffer through the ingress port of the first queue. In this way, after receiving the backpressure signal, the upstream module no longer sends a packet to the buffer having a risk of overflow through the ingress port of the first queue, to implement backpressure control on the first queue. A format of the backpressure signal sent between different modules inside the device is not specifically limited. It should be noted that the upstream module may be, for example, another buffer in the device. This is not specifically limited in this embodiment of this application.

In an example, an implementation of packet drop control may be performing packet drop processing before a packet to enter the first queue is enqueued. For example, the packet to enter the first queue is directly dropped in a tail drop (English: Tail Drop, TD for short) manner. For another example, packet drop processing is performed in a weighted random early detection (English: Weighted Random Early Detection, WRED for short) manner on the packet to enter the first queue. The usage information of the buffer in S101 satisfies the first condition, the first condition includes two thresholds a and b, and a > b. When a queue length of the first queue is less than b, the packet to enter the first queue is not dropped. When a queue length of the first queue is greater than or equal to b and less than or equal to a, the packet to enter the first queue is randomly dropped, where a probability of dropping the packet increases as the queue length of the first queue increases. When the queue length of the first queue is greater than a, all packets to enter the first queue are dropped. It should be noted that this manner is applicable to a case in which the determined first queue is an OQ.

In another example, an implementation of packet drop control may alternatively be performing packet drop processing on a packet that has entered the first queue. For example, a packet is dropped starting from a head of the at least one first queue. For another example, a packet is dropped starting from a tail of the at least one first queue. It should be noted that, when the device uses the congestion control manner of dropping the packet that has entered the first queue, the device needs to support the packet drop manner, or configuration information needs to be added to the device, so that the device supports the packet drop manner.

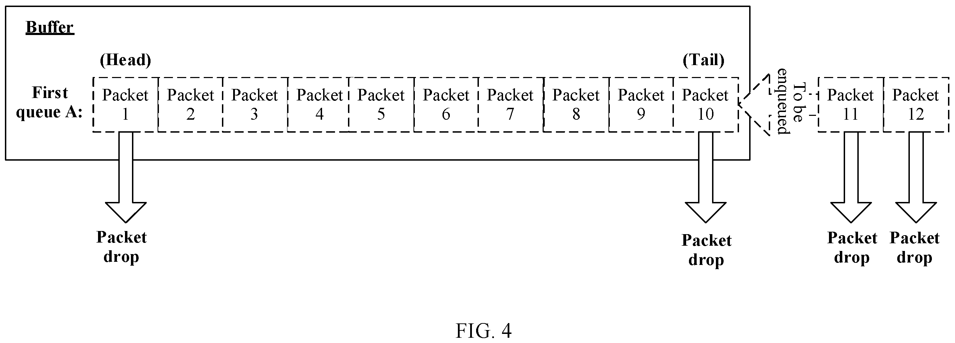

In still another example, in an implementation of packet drop control, packet drop processing may alternatively be performed before a packet to enter the first queue is enqueued, and at the same time, packet drop processing is performed on a packet that has entered the first queue. For example, as shown in FIG. 4, it is assumed that in the buffer in the device, the at least one first queue on which congestion control is implemented in S 102 includes a first queue A, and the first queue A includes a packet 1, a packet 2, ..., and a packet 10. In this case, packet drop processing may be performed on a packet 11 and a packet 12 that are to enter the first queue A, packet drop processing starts from a head (that is, from the packet 1) of the first queue, and packet drop processing starts from a tail (that is, from the packet 10) of the first queue. In this way, storage space in the buffer can be released more quickly, to improve congestion control efficiency.

It should be noted that, if the at least one first queue on which congestion control is performed in S 102 includes an idle queue, because of a characteristic of the idle queue, to be specific, no enqueuing or dequeuing operation is performed in the idle queue, congestion control may be performed on the idle queue only in a packet drop control manner, until all packets in the idle queue are dropped.

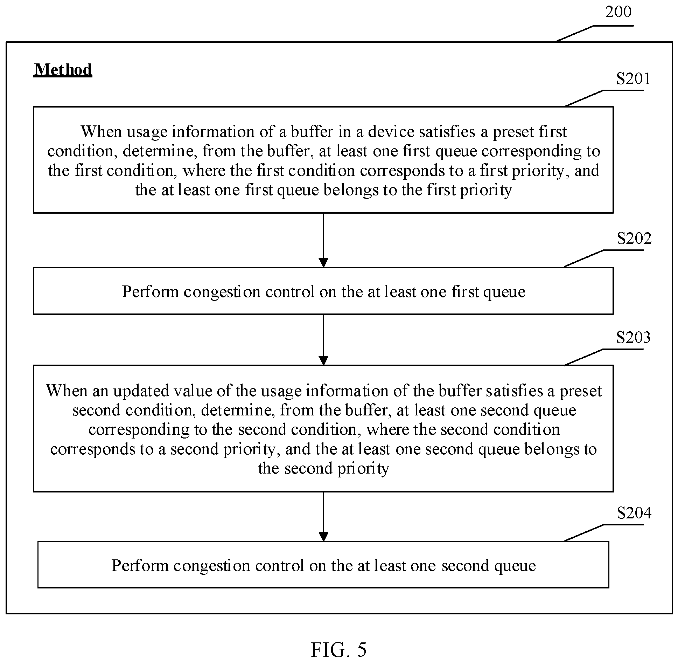

It can be learned that in this embodiment of this application, a condition for triggering congestion control is set based on a status of the buffer in the device, and the at least one to-be-processed queue during congestion control is determined based on a real-time status of each queue in the buffer. When it is determined that the current usage information of the buffer in the device satisfies the preset condition, an identifier of at least one to-be-processed queue corresponding to the condition may be obtained, to perform congestion control on the at least one queue based on the obtained identifier of the at least one queue. In this way, the device does not need to perform congestion control based on a queue granularity, and sets a condition for triggering congestion control only for a buffer status of overall buffer space. The device can process a queue corresponding to the condition in a targeted manner when triggering congestion control. This simplifies configuration, improves buffer space utilization, and implements efficient congestion control while ensuring that no buffer overflow problem occurs, to improve network forwarding performance of the device. Embodiments of this application further provide another congestion control method 200, as shown in FIG. 5. A device that implements the method 200 classifies priorities for queues in a buffer, sets different conditions for triggering congestion control in a targeted manner, for different priorities or different congestion control functions in a same priority, and records and updates, in a targeted manner, in real time, a queue on which congestion control is to be implemented. For example, the method 200 may include the following steps.

S201: When usage information of a buffer in a device satisfies a preset first condition, at least one first queue corresponding to the first condition is determined from the buffer, where the first condition corresponds to a first priority, and the at least one first queue belongs to the first priority.

S202: Congestion control is performed on the at least one first queue.

S203: When an updated value of the usage information of the buffer satisfies a preset second condition, at least one second queue corresponding to the second condition is determined from the buffer, where the second condition corresponds to a second priority, and the at least one second queue belongs to the second priority.

S204: Congestion control is performed on the at least one second queue.

It should be noted that, for implementations and effects of S201 and S202, refer to related descriptions of S101 and S102 in the method 100. For implementations and effects of S203 and S204, refer to related descriptions of S101 and S102 in the method 100.

The updated value of the usage information of the buffer and the usage information of the buffer in S201 are respectively different usage information for reflecting a usage status of the buffer at two different moments. A size relationship between the two is not specifically limited in this embodiment of this application. For example, the usage information of the buffer may be a buffer occupancy rate 95% at a first moment, and the updated value of the usage information of the buffer may be a buffer occupancy rate 75% at a second moment. For another example, the usage information of the buffer may be a buffer occupancy rate 75% at the first moment, and the updated value of the usage information of the buffer may be a buffer occupancy rate 95% at the second moment.

In some possible implementations, the second priority may be different from the first priority.

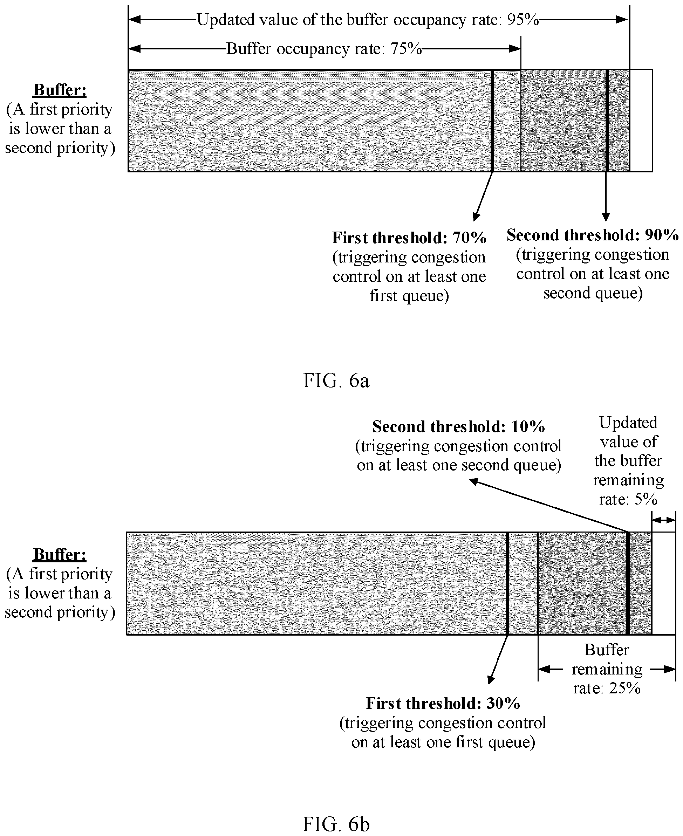

If the second priority is higher than the first priority, in an example, and the usage information of the buffer is the buffer occupancy rate, the updated value of the usage information of the buffer in S203 is greater than the usage information of the buffer in S201. The first condition in S201 may include that the buffer occupancy rate is greater than a first threshold, and the second condition in S203 may include that the updated value of the buffer occupancy rate is greater than a second threshold, where the second threshold is greater than the first threshold. As shown in FIG. 6a, the first threshold is 70%, the second threshold is 90%, the buffer occupancy rate is 75%, and the updated value of the buffer occupancy rate is 95%. In another example, if the usage information of the buffer is a buffer remaining rate, the updated value of the usage information of the buffer in S203 is less than the usage information of the buffer in S20 1. The first condition in S201 may include that the buffer remaining rate is less than the first threshold, and the second condition in S203 includes that the updated value of the buffer remaining rate is less than the second threshold, where the second threshold is less than the first threshold. As shown in FIG. 6b, the first threshold is 30%, the second threshold is 10%, the buffer remaining rate is 25%, and the updated value of the buffer remaining rate is 5%.

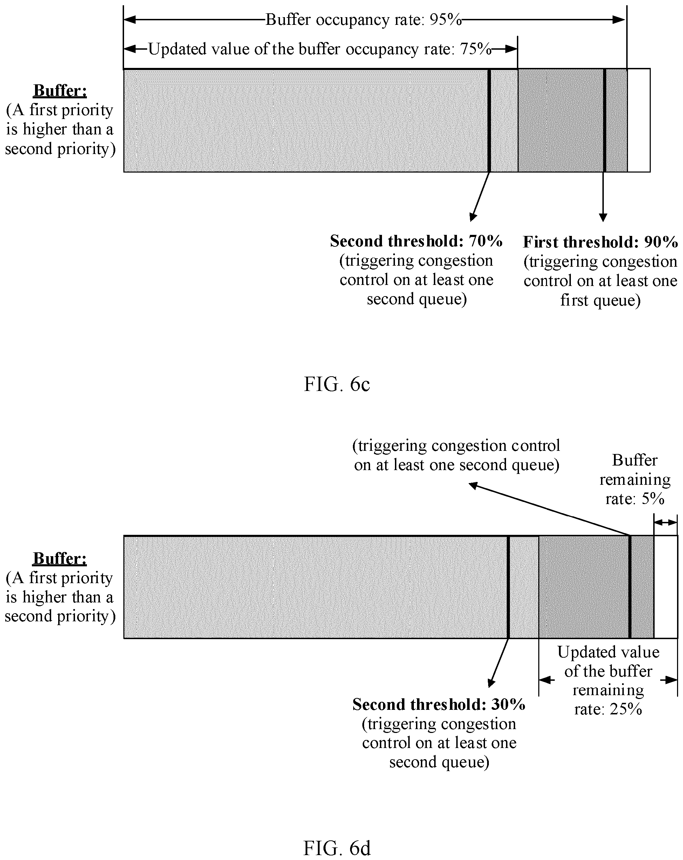

If the second priority is less than the first priority, in an example, the usage information of the buffer is the buffer occupancy rate, the updated value of the usage information of the buffer in S203 is less than the usage information of the buffer in S201. The first condition in S201 may include that the buffer occupancy rate is greater than the first threshold, and the second condition in S203 may include that the updated value of the buffer occupancy rate is greater than the second threshold, where the first threshold is greater than the second threshold. As shown in FIG. 6c, the second threshold is 70%, the first threshold is 90%, the buffer occupancy rate is 95%, and the updated value of the buffer occupancy rate is 75%. In another example, if the usage information of the buffer is the buffer remaining rate, the updated value of the usage information of the buffer in S203 is greater than the usage information of the buffer in S201. The first condition in S201 may include that the buffer remaining rate is less than the first threshold, and the second condition in S203 includes that the updated value of the buffer remaining rate is less than the second threshold, where the first threshold is less than the second threshold. As shown in FIG. 6d, the second threshold is 30%, the first threshold is 10%, the buffer remaining rate is 5%, and the updated value of the buffer remaining rate is 25%.

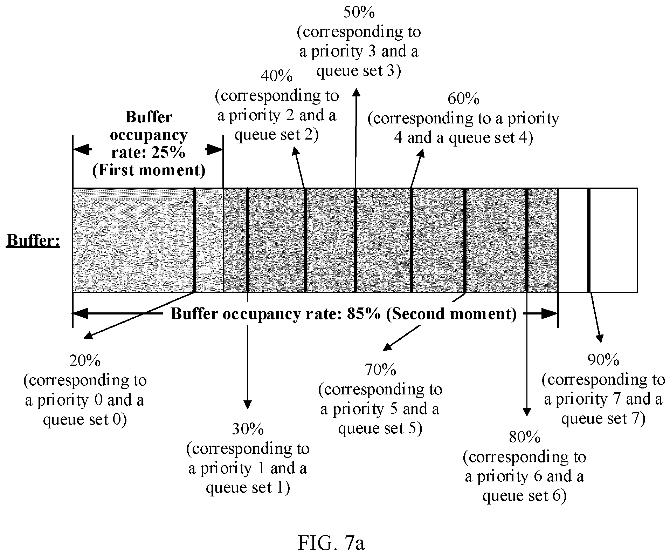

For example, it is assumed that the device classifies queues into eight priorities based on quality of service (English: Quality of Service, QoS for short): a priority 0 to a priority 7. The priority 7 is higher than the priority 0, and the usage information of the buffer is the buffer occupancy rate. As shown in FIG. 7a, a threshold 1 to a threshold 8 corresponding to the priority 0 to the priority 7 are respectively 20%, 30%, 40%, 50%, 60%, 70%, 80%, and 90%. The device further records a queue set 0 to a queue set 7 on which congestion control is to be performed, and the queue set 0 to the queue set 7 respectively correspond to the priority 0 to the priority 7. When the buffer occupancy rate of the buffer at a first moment is 25%, congestion control is performed on a queue in the queue set 0 corresponding to the priority 0. When the buffer occupancy rate of the buffer at a second moment is 85%, congestion control may include: performing congestion control on the queue in the queue set 0 corresponding to the priority 0, and performing congestion control on a queue in the queue set 6 corresponding to the priority 6.

In this implementation, queues in the buffer are classified into different priorities. When it is determined that the buffer has a risk of overflow, if a congestion degree in the buffer is low, congestion control is first performed on a queue with a low priority, and congestion control is performed on a queue with a high priority only when the congestion degree is high. In this way, a priority is set in association with a corresponding condition for triggering congestion control. Congestion control is first performed on the queue with a low priority. This ensures that high-priority traffic is effectively forwarded by the device, improves network forwarding performance of the device, and improves user experience in using the device.

In some other possible implementations, for a scenario in which the second priority and the first priority may be a same priority, or a scenario in which priorities are not classified, the first condition and the second condition in S202 and S204 may be correspondingly set based on a sequence of occasions for triggering different congestion control manners. For example, if both an ECN function and a PFC function are enabled, and the PFC function is used to prevent an upstream device from sending a packet, a backpressure control manner in congestion control is the last congestion control means used in a scenario such as lossless traffic forwarding. If the PFC function is triggered early, an egress port in a non-congested state may not maintain a line rate, which greatly reduces network performance. Therefore, when it is determined that a risk of buffer overflow exists, if the congestion degree in the buffer is low, for a same priority, the ECN function is first triggered to perform congestion control on a to-be-processed OQ corresponding to the priority, and the PFC function is triggered to perform congestion control on a to-be-processed IQ corresponding to the priority only when the congestion degree is high.

For a case in which the usage information of the buffer is the buffer occupancy rate, in one case, if the updated value of the usage information of the buffer in S203 is greater than the usage information of the buffer in S201, the first condition in S201 may include that the buffer occupancy rate is greater than the first threshold, and the second condition in S203 may include that the updated value of the buffer occupancy rate is greater than the second threshold, where the second threshold is greater than the first threshold. For example, refer to FIG. 6a. In another case, if the updated value of the usage information of the buffer in S203 is less than the usage information of the buffer in S201, the first condition in S201 may include that the buffer occupancy rate is greater than the first threshold, and the second condition in S203 may include that the updated value of the buffer occupancy rate is greater than the second threshold, where the first threshold is greater than the second threshold. For example, refer to FIG. 6c.

For a case in which the usage information of the buffer is the buffer remaining rate, in one case, if the updated value of the usage information of the buffer in S203 is less than the usage information of the buffer in S201, the first condition in S201 may include that the buffer remaining rate is less than the first threshold, and the second condition in S203 includes that the updated value of the buffer remaining rate is less than the second threshold, where the second threshold is less than the first threshold. For example, refer to FIG. 6b. In another case, if the updated value of the usage information of the buffer in S203 is greater than the usage information of the buffer in S201, the first condition in S201 may include that the buffer remaining rate is less than the first threshold, and the second condition in S203 includes that the updated value of the buffer remaining rate is less than the second threshold, where the first threshold is less than the second threshold. For example, refer to FIG. 6d.

It should be noted that, in this implementation, the device needs to record queues, to which different congestion control manners are applicable, on which congestion control is to be implemented. For example, for a device that enables both an ECN function and a PFC function, the device needs to record an OQ, corresponding to an ECN control manner, on which congestion control is to be implemented, and an IQ, corresponding to a PFC control manner, on which congestion control is to be implemented.

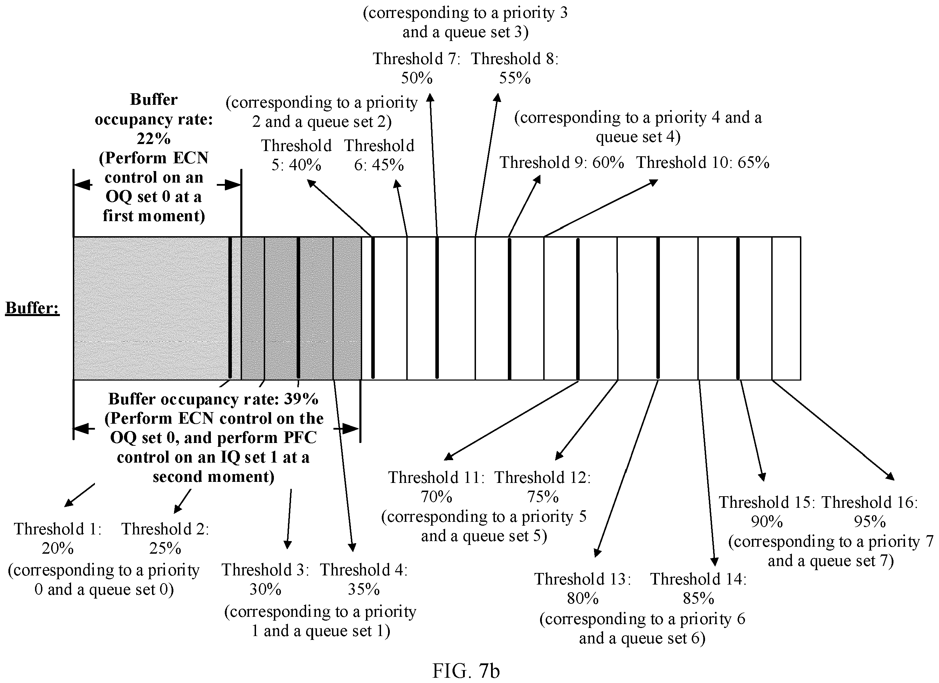

For example, if both the ECN function and the PFC function are enabled in the device, the device classifies queues into eight priorities based on QoS: a priority 0 to a priority 7. The priority 7 is higher than the priority 0, and the usage information of the buffer is the buffer remaining rate. As shown in FIG. 7b, a threshold 1 to a threshold 16 corresponding to the priority 0 to the priority 7 are respectively 20%, 25%, 30%, 35%, 40%, 45%, 50%, 55%, 60%, 65%, 70%, 75%, 80%, 85%, 90% and 95%. The threshold 1, the threshold 3, the threshold 5, ..., and the threshold 15 are respectively ECN thresholds corresponding to the priority 0 to the priority 7, and the threshold 2, the threshold 4, the threshold 6, ..., and the threshold 16 are respectively PFC thresholds corresponding to the priority 0 to the priority 7. The device further records an IQ set 0 to an IQ set 7 and an OQ set 0 to an OQ set 7 on which congestion control is to be performed. The IQ set 0 to the IQ set 7 respectively correspond to the priority 0 to the priority 7, and the OQ set 0 to the OQ set 7 respectively correspond to the priority 0 to the priority 7. When the buffer occupancy rate of the buffer at a first moment is 22%, ECN control is performed on an OQ in the OQ set 0 corresponding to the priority 0, to be specific, an ECN mark is added to a dequeued packet of the OQ in the OQ set 0. When the buffer occupancy rate of the buffer is 39% at a second moment, the ECN mark is added to the dequeued packet of the OQ in the OQ set 0, and PFC control is performed on an IQ in the IQ set 1 corresponding to the priority 1. A manner in which PFC control is performed on the IQ in the IQ set 1 corresponding to the priority 1 may include, for example, sending a PFC frame to an upstream device (or an upstream buffer) through an ingress port corresponding to the IQ in the IQ set 1. In this way, the ECN control manner and the PFC control manner are separately set in association with different trigger conditions, so that it can be ensured that in a scenario in which priorities are not classified or a same priority is classified, ECN control is first triggered and then PFC control is triggered, to enable congestion control to be more proper.

In this implementation, when a plurality of congestion control manners are enabled and it is determined that a risk of buffer overflow exists at the same time, a sequence of triggering the plurality of congestion control manners is appropriately set, and corresponding trigger conditions are set based on the sequence of triggering the congestion control manners. In this way, if a congestion degree in the buffer is low, congestion control is performed by using a determined congestion control manner that needs to be triggered first, and congestion control is performed by using a determined congestion control manner that needs to be triggered later only when the congestion degree is high. The congestion control manner is set in association with the corresponding condition for triggering congestion control, to ensure that congestion control of a queue is more appropriate, improve network forwarding performance of the device, and improve user experience in using the device.

It should be noted that congestion control triggered by a plurality of different conditions for triggering congestion control may be considered as a decoupling process. To be specific, when the usage information of the buffer in the device satisfies the preset first condition, congestion control is always performed on the at least one first queue corresponding to the first condition until the usage information of the buffer in the device no longer satisfies the first condition. Similarly, when the usage information of the buffer in the device satisfies the preset second condition, congestion control is always performed on the at least one second queue corresponding to the second condition until the usage information of the buffer in the device no longer satisfies the second condition. The two congestion control processes do not interfere with each other.

It can be learned that in this embodiment of this application, a plurality of conditions for triggering congestion control are preset based on a status of the buffer in the device, and different to-be-processed queues during congestion control are determined based on a real-time status of each queue in the buffer. At different moments, when it is determined that the usage information of the buffer in the device satisfies different conditions, corresponding congestion control is performed on a to-be-processed queue corresponding to the condition. In this way, the device does not need to perform congestion control based on a queue granularity, and sets different conditions for triggering different congestion control only for a buffer status of overall buffer space. The device can process queues corresponding to the different conditions in a targeted manner. This simplifies configuration, improves buffer space utilization, and implements efficient and accurate congestion control while ensuring that no buffer overflow problem occurs, to improve network forwarding performance of the device.

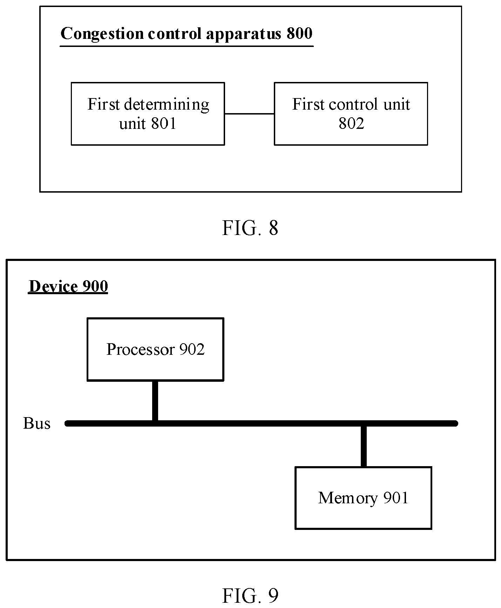

FIG. 8 is a schematic diagram of a structure of a congestion control apparatus according to an embodiment of this application. The apparatus 800 may be a device, and the apparatus 800 may include a first determining unit 801 and a first control unit 802.

The first determining unit 801 is configured to: when usage information of a buffer in a device satisfies a preset first condition, determine, from the buffer, at least one first queue greater than or equal to a queue delay threshold or greater than or equal to a queue length threshold, where the first condition includes a first threshold corresponding to the usage information of the buffer.

The first control unit 802 is configured to perform congestion control on the at least one first queue.

It should be noted that the apparatus 800 is configured to perform the steps corresponding to the embodiments shown in FIG. 2 or FIG. 5, to implement congestion control according to the congestion control method provided in embodiments of this application. The first determining unit 801 corresponds to S 101 or S201, and the first control unit 802 corresponds to S102 or S202.

In some possible implementations, the first determining unit 801 is specifically configured to determine, as the at least one first queue, first M queues that are in a plurality of queues in the buffer and that are sorted in descending order of queue delays. The queue delay threshold is equal to a queue delay of an M^{th} queue, and M is a positive integer. Alternatively, the first determining unit 801 is specifically configured to: determine, as the at least one first queue, first N queues that are in a plurality of queues in the buffer and that are sorted in descending order of queue lengths. The queue length threshold is equal to a queue length of an N^{th} queue, and N is a positive integer.

In an example, the first condition corresponds to a first priority, and the at least one first queue belongs to the first priority.

In this example, the first determining unit 801 is specifically configured to determine, as the at least one first queue, first K queues that are in a plurality of queues corresponding to the first priority and that are sorted in descending order of queue delays. The queue delay threshold is equal to a queue delay of a K^{th} queue, and K is a positive integer. Alternatively, the first determining unit 801 is specifically configured to: determine, as the at least one first queue, first L queues that are in a plurality of queues corresponding to the first priority and that are sorted in descending order of queue lengths. The queue length threshold is equal to a queue length of an L^{th} queue, and L is a positive integer.

It may be understood that the usage information of the buffer is a buffer occupancy rate, and the first condition includes that the buffer occupancy rate is greater than the first threshold; or the usage information of the buffer is a buffer remaining rate, and the first condition includes that the buffer remaining rate is less than the first threshold.

In some other possible implementations, the apparatus 800 may further include a second determining unit and a second control unit. The second determining unit is configured to: when an updated value of the usage information of the buffer satisfies a preset second condition, determine, from the buffer, at least one second queue corresponding to the second condition, where the second condition corresponds to a second priority, the at least one second queue belongs to the second priority, and the second condition is a second threshold corresponding to the updated value of the usage information of the buffer. The second control unit is configured to perform congestion control on the at least one second queue.

It should be noted that the apparatus 800 is configured to perform the steps corresponding to the embodiments shown in FIG. 5, to implement congestion control according to the congestion control method provided in embodiments of this application. The first determining unit 801 corresponds to S201, the first control unit 802 corresponds to S202, the second determining unit corresponds to S203, and the second control unit corresponds to S204.

In an example, the second priority and the first priority to which the first queue belongs are different.

In another example, the second priority and the first priority to which the first queue belongs are the same.

In some possible implementations, the updated value of the usage information of the buffer is an updated value of the buffer occupancy rate, and the second condition includes that the updated value of the buffer occupancy rate is greater than the second threshold, where the second threshold is greater than the first threshold; or the updated value of the usage information of the buffer is an updated value of the buffer remaining rate, and the second condition includes that the updated value of the buffer remaining rate is less than the second threshold, where the second threshold is less than the first threshold.

In some other possible implementations, the first control unit is specifically configured to: add an explicit congestion notification ECN mark to a dequeued packet in the at least one first queue, where the ECN mark indicates a source end device to reduce a packet sending rate in a queue corresponding to the first queue. In this implementation, the second control unit is specifically configured to: send a first backpressure signal to an upstream device of the device through an ingress port of the at least one second queue, where the first backpressure signal indicates the upstream device to stop sending a packet.

It may be understood that the first control unit is specifically configured to: perform backpressure control or packet drop control on the at least one first queue.

In some possible implementations, the at least one first queue further includes a queue in which there is neither a dequeued packet nor an enqueued packet within preset duration.

It should be noted that the congestion control apparatus 800 provided in this embodiment of this application corresponds to the foregoing congestion control method. Therefore, for various possible implementations and achieved technical effects of the apparatus 800, refer to related descriptions of the embodiments corresponding to FIG. 2 and FIG. 5.

In addition, embodiments of this application further provide a device. As shown in FIG. 9, the device 900 includes a memory 901 and a processor 902. The memory 901 is configured to store program code. The processor 902 is configured to run instructions in the program code, to enable the device 900 to perform the congestion control method in any implementation in the embodiments corresponding to FIG. 2 and FIG. 5.

For example, the device 900 may further include a communication interface, configured to receive a packet, and store the packet in a queue corresponding to a buffer.

For example, the processor 902 of the device 900 is configured to run the instructions in the program code stored in the memory 901, so that the device 900 performs the following congestion control method:
when usage information of the buffer in the device satisfies a preset first condition, determining, from the buffer, at least one first queue greater than or equal to a queue delay threshold or greater than or equal to a queue length threshold, where the first condition includes a first threshold corresponding to the usage information of the buffer; and
performing congestion control on the at least one first queue.

The memory 901 may be a volatile memory (volatile memory), for example, a random access memory (random access memory, RAM); a non-volatile memory (non-volatile memory), for example, a read-only memory (read-only memory, ROM), a flash memory (flash memory), a hard disk drive (hard disk drive, HDD), or a solid-state drive (solid-state drive, SSD); or a combination of the foregoing types of memories, configured to store program code that can implement the method in this application, a configuration file of a network device in a TSN domain, or other content. The processor 902 is a control center of a controller, and may be a central processing unit (central processing unit, CPU), or may be an application-specific integrated circuit (application-specific integrated circuit, ASIC), or one or more integrated circuits configured to implement embodiments of this application, for example, one or more digital signal processors (digital signal processors, DSPs), or one or more field programmable gate arrays (field programmable gate arrays, FPGAs).

The communication interface is configured to exchange data with another device, for example, receive a packet from another device through the communication interface. For another example, the communication interface for sending a packet to another device through the communication interface may be an Ethernet (Ethernet) interface, a fast Ethernet (Fast Ethernet, FE) interface, or a gigabit Ethernet (Gigabit Ethernet, GE) interface.

In addition, embodiments of this application further provide a computer program product. When the computer program product is run on a computer, the computer is enabled to perform the congestion control method according to any implementation in the embodiments corresponding to FIG. 2 and FIG. 5.

For example, when the computer program product is run on the computer, for example, on the device 900, the computer is enabled to perform the following congestion control method:
when usage information of a buffer in a device satisfies a preset first condition, determining, from the buffer, at least one first queue greater than or equal to a queue delay threshold or greater than or equal to a queue length threshold, where the first condition includes a first threshold corresponding to the usage information of the buffer; and
performing congestion control on the at least one first queue.

In addition, embodiments of this application further provide a computer-readable storage medium. The computer-readable storage medium stores instructions. When the instructions are run on a computer, the computer is enabled to perform the congestion control method according to any implementation in the embodiments corresponding to FIG. 2 and FIG. 5.

For example, the computer-readable storage medium stores instructions or program code. When the instructions or program code are/is run on a computer, for example, on the device 900, the computer is enabled to perform the following congestion control method:
when usage information of a buffer in a device satisfies a preset first condition, determining, from the buffer, at least one first queue greater than or equal to a queue delay threshold or greater than or equal to a queue length threshold, where the first condition includes a first threshold corresponding to the usage information of the buffer; and
performing congestion control on the at least one first queue.

It should be noted that any apparatus embodiment described above is merely an example. The units described as separate parts may or may not be physically separate, and parts displayed as units may or may not be physical units, that is, may be located in one position, or may be distributed on a plurality of network units. Some or all the modules may be selected based on actual needs to achieve the objectives of the solutions of embodiments. In addition, in the accompanying drawings of the device embodiments provided by this application, connection relationships between modules indicate that the modules have communication connections with each other, which may be specifically implemented as one or more communication buses or signal cables. A person of ordinary skill in the art may understand and implement embodiments of the present invention without creative efforts.

Methods or algorithm steps described in the content disclosed in embodiments of this application may be implemented by hardware, or may be implemented by a processor by executing software instructions. The software instructions may include corresponding software modules. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a hard disk, a removable hard disk, a compact disc, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a core network interface device. Certainly, the processor and the storage medium may exist in the core network interface device as discrete components. Embodiments in this specification are all described in a progressive manner, for same or similar parts in embodiments, refer to these embodiments, and each embodiment focuses on a difference from other embodiments. Especially, an apparatus embodiment is basically similar to a method embodiment, and therefore is described briefly; for related parts, refer to partial descriptions in the method embodiment. The described apparatus embodiment is merely an example. The modules described as separate parts may or may not be physically separate, and parts displayed as modules may or may not be physical modules, may be located in one position, or may be distributed on a plurality of network units. Some or all the modules may be selected based on actual needs to achieve the objectives of the solutions of embodiments. A person of ordinary skill in the art may understand and implement embodiments of the present invention without creative efforts.

The foregoing descriptions are merely example implementations of this application, but are not intended to limit the protection scope of this application.

## Claims

1. A congestion control method, comprising:
when usage information of a buffer in a device satisfies a preset first condition, determining, from the buffer, at least one first queue greater than or equal to a queue delay threshold or greater than or equal to a queue length threshold, wherein the first condition comprises a first threshold corresponding to the usage information of the buffer; and
performing congestion control on the at least one first queue.

2. The method according to claim 1, wherein the determining, from the buffer, at least one first queue greater than or equal to a queue delay threshold comprises:
determining, as the at least one first queue, first M queues that are in a plurality of queues in the buffer and that are sorted in descending order of queue delays, wherein the queue delay threshold is equal to a queue delay of an M^{th} queue, and M is a positive integer; or
the determining, from the buffer, at least one first queue greater than or equal to a queue length threshold comprises:
determining, as the at least one first queue, first N queues that are in a plurality of queues in the buffer and that are sorted in descending order of queue lengths, wherein the queue length threshold is equal to a queue length of an N^{th} queue, and N is a positive integer.

3. The method according to claim 1, wherein the first condition corresponds to a first priority, and the at least one first queue belongs to the first priority.

4. The method according to claim 3, wherein the determining, from the buffer, at least one first queue greater than a queue delay threshold comprises:
determining, as the at least one first queue, first K queues that are in a plurality of queues corresponding to the first priority and that are sorted in descending order of queue delays, wherein the queue delay threshold is equal to a queue delay of a K^{th} queue, and K is a positive integer; or
the determining, from the buffer, at least one first queue greater than a queue length threshold comprises:
determining, as the at least one first queue, first L queues that are in a plurality of queues corresponding to the first priority and that are sorted in descending order of queue lengths, wherein the queue length threshold is equal to a queue length of an L^{th} queue, and L is a positive integer.

5. The method according to any one of claims 1 to 4, wherein
the usage information of the buffer is a buffer occupancy rate, and the first condition comprises that the buffer occupancy rate is greater than the first threshold; or
the usage information of the buffer is a buffer remaining rate, and the first condition comprises that the buffer remaining rate is less than the first threshold.

6. The method according to any one of claims 1 to 5, wherein the method further comprises:
when an updated value of the usage information of the buffer satisfies a preset second condition, determining, from the buffer, at least one second queue corresponding to the second condition, wherein the second condition corresponds to a second priority, the at least one second queue belongs to the second priority, and the second condition is a second threshold corresponding to the updated value of the usage information of the buffer; and
performing congestion control on the at least one second queue.

7. The method according to claim 6, wherein the second priority and the first priority to which the first queue belongs are different.

8. The method according to claim 6, wherein the second priority and the first priority to which the first queue belongs are the same.

9. The method according to any one of claims 6 to 8, wherein
the updated value of the usage information of the buffer is an updated value of the buffer occupancy rate, and the second condition comprises that the updated value of the buffer occupancy rate is greater than the second threshold, wherein the second threshold is greater than the first threshold; or
the updated value of the usage information of the buffer is an updated value of the buffer remaining rate, and the second condition comprises that the updated value of the buffer remaining rate is less than the second threshold, wherein the second threshold is less than the first threshold.

10. The method according to claim 9, wherein the performing congestion control on the at least one first queue comprises:
adding an explicit congestion notification ECN mark to a dequeued packet in the at least one first queue, wherein the ECN mark indicates a source end device to reduce a packet sending rate in a queue corresponding to the first queue.

11. The method according to claim 10, wherein the performing congestion control on the at least one second queue comprises:
sending a backpressure signal to an upstream device of the device through an ingress port of the at least one second queue, wherein the backpressure signal indicates the upstream device to stop sending a packet.

12. The method according to any one of claims 1 to 11, wherein the performing congestion control on the at least one first queue comprises:
performing backpressure control or packet drop control on the at least one first queue.

13. The method according to any one of claims 1 to 12, wherein the at least one first queue further comprises a queue in which there is neither a dequeued packet nor an enqueued packet within preset duration.

14. A congestion control apparatus, comprising:
a first determining unit, configured to: when usage information of a buffer in a device satisfies a preset first condition, determine, from the buffer, at least one first queue greater than or equal to a queue delay threshold or greater than or equal to a queue length threshold, wherein the first condition comprises a first threshold corresponding to the usage information of the buffer; and
a first control unit, configured to perform congestion control on the at least one first queue.

15. The apparatus according to claim 14, wherein the first determining unit is specifically configured to:
determine, as the at least one first queue, first M queues that are in a plurality of queues in the buffer and that are sorted in descending order of queue delays, wherein the queue delay threshold is equal to a queue delay of an M^{th} queue, and M is a positive integer; or
determine, as the at least one first queue, first N queues that are in a plurality of queues in the buffer and that are sorted in descending order of queue lengths, wherein the queue length threshold is equal to a queue length of an N^{th} queue, and N is a positive integer.

16. The apparatus according to claim 14, wherein the first condition corresponds to a first priority, and the at least one first queue belongs to the first priority.

17. The apparatus according to claim 16, wherein the first determining unit is specifically configured to:
determine, as the at least one first queue, first K queues that are in a plurality of queues corresponding to the first priority and that are sorted in descending order of queue delays, wherein the queue delay threshold is equal to a queue delay of a K^{th} queue, and K is a positive integer; or
determine, as the at least one first queue, first L queues that are in a plurality of queues corresponding to the first priority and that are sorted in descending order of queue lengths, wherein the queue length threshold is equal to a queue length of an L^{th} queue, and L is a positive integer.

18. The apparatus according to any one of claims 14 to 17, wherein
the usage information of the buffer is a buffer occupancy rate, and the first condition comprises that the buffer occupancy rate is greater than the first threshold; or
the usage information of the buffer is a buffer remaining rate, and the first condition comprises that the buffer remaining rate is less than the first threshold.

19. The apparatus according to any one of claims 14 to 18, wherein the apparatus further comprises:
a second determining unit, configured to: when an updated value of the usage information of the buffer satisfies a preset second condition, determine, from the buffer, at least one second queue corresponding to the second condition, wherein the second condition corresponds to a second priority, the at least one second queue belongs to the second priority, and the second condition is a second threshold corresponding to the updated value of the usage information of the buffer; and
a second control unit, configured to perform congestion control on the at least one second queue.

20. The apparatus according to claim 19, wherein the second priority and the first priority to which the first queue belongs are different.

21. The apparatus according to claim 19, wherein the second priority and the first priority to which the first queue belongs are the same.

22. The apparatus according to any one of claims 19 to 21, wherein
the updated value of the usage information of the buffer is an updated value of the buffer occupancy rate, and the second condition comprises that the updated value of the buffer occupancy rate is greater than the second threshold, wherein the second threshold is greater than the first threshold; or
the updated value of the usage information of the buffer is an updated value of the buffer remaining rate, and the second condition comprises that the updated value of the buffer remaining rate is less than the second threshold, wherein the second threshold is less than the first threshold.

23. The apparatus according to claim 22, wherein the first control unit is specifically configured to:
add an explicit congestion notification ECN mark to a dequeued packet in the at least one first queue, wherein the ECN mark indicates a source end device to reduce a packet sending rate in a queue corresponding to the first queue.

24. The apparatus according to claim 23, wherein the second control unit is specifically configured to:
send a backpressure signal to an upstream device of the device through an ingress port of the at least one second queue, wherein the backpressure signal indicates the upstream device to stop sending a packet.

25. The apparatus according to any one of claims 14 to 24, wherein the first control unit is specifically configured to:
perform backpressure control or packet drop control on the at least one first queue.

26. The apparatus according to any one of claims 14 to 25, wherein the at least one first queue further comprises a queue in which there is neither a dequeued packet nor an enqueued packet within preset duration.

27. A device, wherein the device comprises a memory and a processor, wherein
the memory is configured to store program code; and
the processor is configured to run instructions in the program code, to enable the device to perform the congestion control method according to any one of claims 1 to 13.

28. A computer-readable storage medium, wherein the computer-readable storage medium stores instructions; and when the instructions are run on a computer, the computer is enabled to perform the congestion control method according to any one of claims 1 to 13.
